# EUROPÄISCHE PATENTSCHRIFT

(11) **EP 2 635 394 B1**
(45) Veröffentlichungstag und Bekanntmachung des Hinweises auf die Patenterteilung: **15.05.2019**
(21) Anmeldenummer: 11833585.0
(22) Anmeldetag: 03.11.2011
(51) Int. Cl.: B23B 51/04

(54) **EINLIPPENBOHRER**
GUN DRILL
FORET 3/4

(30) Priorität: 05.11.2010 DE 102010050351
(43) Veröffentlichungstag der Anmeldung: 11.09.2013
(73) Patentinhaber: Botek Präzisionsbohrtechnik GmbH, 72585 Riederich (DE)
(72) Erfinder: WENZELBURGER, Jürgen, 72555 Metzingen (DE); DEEG, Jürgen, 72555 Metzingen (DE)
(74) Vertreter: Jakelski & Althoff Patentanwälte PartG mbB
(86) Internationale Anmeldenummer: PCT/DE2011/001927
(87) Internationale Veröffentlichungsnummer: WO 2012/083908

(56) Entgegenhaltungen:
- EP-A1- 1 428 601
- EP-A1- 1 428 601
- EP-A1- 2 236 231
- WO-A1-2008/096603
- WO-A2-97/29876
- CH-A- 475 058
- CH-A- 475 058
- DE-A1- 4 338 545
- JP-A- 63 102 813
- JP-A- H06 170 640
- JP-A- H09 103 918
- JP-A- S63 102 813
- US-A- 3 076 356
- US-A- 5 967 707
- US-A1- 2006 039 766

## Beschreibung

Die Erfindung betrifft einen Einlippenbohrer nach dem Oberbegriff des Anspruchs 1.

### Stand der Technik

Ein solcher Einlippenbohrer geht beispielsweise aus der JP 63-102813A oder aus der DE 79 22 246 U1 hervor.

Einlippenbohrer werden verwendet, um Bohrungen in Werkstücke einzubringen. Verschiedene Arten von Einlippenbohrern sind in den VDI-Richtlinien VDI 3210 und VDI 3208 dargestellt. Einlippenbohrer werden hauptsächlich zur Herstellung von Bohrungen mit vergleichsweise kleinem Durchmesser eingesetzt, der vorwiegend im Bereich von 0,5 mm bis 50 mm liegt, wobei die Bohrtiefe ein Vielfaches des Bohrdurchmessers betragen kann. Übliche Werte für die Bohrtiefe liegen im Bereich des 10-fachen bis 100-fachen des Bohrdurchmessers, können jedoch auch darüber oder darunter liegen.

Einlippenbohrer finden als Vollbohrwerkzeuge oder als Aufbohrwerkzeuge Verwendung. Vollbohrwerkzeuge dienen dazu, in ein Vollmaterial Bohrungen einzubringen. Beim Vollbohren wird der gesamte kreisförmige Querschnitt der Bohrung vom Bohrwerkzeug zerspant. Aufbohrwerkzeuge werden eingesetzt, um den Durchmesser einer bereits in einem Werkstück vorhandenen Bohrung zu vergrößern. Die bereits vorhandene "Bohrung" oder Öffnung kann dabei gebohrt, gegossen oder anderweitig hergestellt worden sein und ist in ihrem Durchmesser kleiner als die vom Bohrwerkzeug herzustellende Bohrung. Beim Aufbohren wird ein ringförmiger Querschnitt zerspant.

Allgemein bestehen Einlippenbohrer aus einem Bohrkopf und einem Bohrerschaft, auch kurz Schaft genannt, mit einem Einspann-Ende. Am Bohrkopf ist zumindest eine Schneide ausgebildet, die sich im Falle eines Vollbohrwerkzeugs von der Bohrermittelachse bis zum Bohrerumfang erstreckt.

Weiterhin sind gewöhnlich am Umfang des Bohrkopfes Führungselemente angeordnet. Darüber hinaus ist wenigstens ein im Bohrerschaft und im Bohrkopf verlaufender Kanal vorgesehen, der am Bohrkopf und am Einspann-Ende Öffnungen aufweist. Durch diesen Kanal wird vom Einspann-Ende ausgehend Kühlmittel unter Druck zugeführt, das am Bohrkopf austritt und neben der Kühlung der Schneide und der Führungselemente insbesondere die Aufgabe hat, die beim Bohren entstehenden Späne durch eine im Bohrkopf und im Bohrerschaft vorhandene, zumeist im Wesentlichen V-förmig ausgebildete Spanabfuhrnut herauszuspülen. Die Nut wird auch als Spanraum bezeichnet und schließt üblicherweise einen Winkel von ca. 90° bis 120° ein.

Aus der JP 63-102813A ist ein Einlippenbohrer bekannt geworden, bei dem im Bereich des Bohrkopfes in einer Wand einer V-förmigen Nut zur Abfuhr der Späne eine bogenförmige Rille angeordnet ist, die sich in Richtung der Bohrerachse erstreckt.

Derartige Einlippenbohrer werden gewöhnlich maschinenseitig an ihrem Einspann-Ende in einer dafür vorgesehenen Aufnahme in einer Spindel aufgenommen und von der Spindel um die Bohrermittelachse in Rotation versetzt. Gleichzeitig wird das Werkzeug entlang einer Mittelachse mit einem definierten Vorschub pro Umdrehung auf ein Werkstück zubewegt. Dabei dringt der Einlippenbohrer in das Werkstück ein, wobei an der am Bohrkopf angeordneten Schneide das Material des Werkstücks abgespant und in Form von Spänen vom Werkstück abgetrennt wird. Die dabei entstehenden Späne werden durch das Kühlmittel, welches durch den wenigstens einen innenliegenden Kanal über die Spindel zugeführt wird, entlang der Spanabfuhrnut aus der Bohrung ausgespült.

Es ist darüber hinaus auch möglich, das Werkstück die Rotation und/oder die Vorschubbewegung ausführen zu lassen, oder die Rotation und/oder die Vorschubbewegung zum Teil durch das Werkzeug und zum Teil durch das Werkstück auszuführen.

Ferner kann auch eine oszillierte Hubbewegung des Werkzeugs und/oder des Werkstücks vorgesehen sein, die beispielsweise mit einer aus der DE 10 2005 025 364 A1 bekannt gewordenen Bohrvorrichtung möglich ist.

Einlippenbohrer werden vorzugsweise dazu verwendet, um Bohrungen in Werkstücke einzubringen, die mit anderen Fertigungsverfahren nicht oder nicht wirtschaftlich herstellbar sind. Oft werden diese Werkstücke in großen Serien gefertigt. Verbesserungen, die zu einer Steigerung der Fertigungsgeschwindigkeit führen, sind deshalb generell wünschenswert und selbst kleine Verbesserungen führen zu signifikanten Einsparungen bei den Fertigungskosten.

Die Fertigungsgeschwindigkeit ist bei Bohrwerkzeugen durch das Produkt aus Vorschub pro Umdrehung des Werkzeuges und der Anzahl der Umdrehungen pro Minute definiert und wird allgemein als Vorschubgeschwindigkeit bezeichnet.

Es ist nun ein Ziel der Tiefbohrtechnik, Tiefbohrwerkzeuge herzustellen, die auf möglichst kostengünstige Weise präzise Bohrungen mit einem geringem Mittenverlauf ermöglichen.

Als Mittenverlauf wird eine die Qualität von Bohrungen charakterisierende Messgröße bezeichnet. Der Mittenverlauf ist die Abweichung des Bohrungsaustritts zum Bohrungseintritt quer zur idealen Achse der Bohrung. Solche Bohrungen können gewöhnlich mit an sich bekannten Einlippenbohrern nicht in einem Arbeitsschritt hergestellt werden. Es war daher bisher erforderlich, die Werkstücke zunächst mit einem Vollbohrwerkzeug vorzubohren. Bei diesem ersten Schritt wird der gewünschte Mittenverlauf noch nicht erreicht. In einem zweiten Arbeitsschritt werden die Werkstücke mit einem Aufbohrwerkzeug aufgebohrt. Bei diesem zweiten Aufbohr-Arbeitsschritt ist es möglich, den gewünschten Mittenverlauf zu erzielen. Problematisch hierbei ist, dass zwei Arbeitsschritte notwendig sind, ein Vorbohren mit Hilfe eines Vollbohrwerkzeuges und ein anschließendes Aufbohren mit Hilfe eines Aufbohrwerkzeuges.

### Offenbarung der Erfindung

Der Erfindung liegt daher die Aufgabe zugrunde, einen Einlippenbohrer dahingehend weiterzubilden, dass in einem einzigen Arbeitsschritt eine Bohrung hoher Güte mit einem besonders kleinen Mittenverlauf möglich ist.

Diese Aufgabe wird durch die in Anspruch 1 angegebenen Merkmale gelöst.

Mit Hilfe des erfindungsgemäßen Einlippenbohrers, bei dem wenigstens ein Teil des wenigstens einen Führungselements so angeordnet ist, dass vorgebbare Winkelbereiche größer als 245°, von der Schneide entgegen der Drehrichtung des Bohrers aus gemessen, von dem Führungselement überdeckt werden, ist es möglich, in einem einzigen Arbeitsschritt Bohrungen durch Vollbohren herzustellen, deren Mittenverlauf deutlich kleiner ist als der Mittenverlauf der aus dem Stand der Technik bekannten Einlippenbohrer. Aus diesem Grunde kann auf einen zweiten Arbeitsschritt zum Erreichen des gewünschten Mittenverlaufs verzichtet werden. In umfänglichen Versuchen wurde festgestellt, dass der Mittenverlauf von Bohrungen, die mit dem erfindungsgemäßen Werkzeug hergestellt wurden, unter gleichen Versuchsbedingungen im Mittel lediglich 50 % des Mittenverlaufs von Bohrungen beträgt, die mit aus dem Stand der Technik bekannten, gebräuchlichen Einlippenbohrern hergestellt wurden.

Ein wesentliches Merkmal des Einlippenbohrers gemäß der Erfindung ist die deutlich bessere Führung des Einlippenbohrers in der Bohrung. Diese wird dadurch erreicht, dass ausgehend von der Schneidenlage, die bei 0° positioniert ist, in einem Winkelbereich größer als 245°, entgegen der Drehrichtung des Bohrers von der Schneide aus gemessen, wenigstens ein (zusätzliches) Führungselement angeordnet ist. Wenn im Folgenden von einem Winkel oder Winkelbereich gesprochen wird, so gilt generell, dass dieser Winkel von der Schneide entgegen der Drehrichtung des Bohrers gemessen wird.

Durch diese Ausbildung besitzt der erfindungsgemäße Einlippenbohrer eine beidseitige Abstützung über einen großen Winkelbereich und somit über eine besonders gute Führung in der Bohrung.

Weitere Vorteile und Merkmale der Erfindung sind Gegenstand der Unteransprüche. So kann beispielsweise vorgesehen sein, dass das wenigstens eine Führungselement in einem Bereich von 270°, entgegen der Drehrichtung des Bohrers von der Schneide aus gemessen, angeordnet ist. "In einem Winkelbereich von 270°" bedeutet dabei, dass das Führungselement so ausgebildet und angeordnet ist, dass ein Winkel, der beispielsweise bei 260° beginnt und über 270° hinausreicht, beispielsweise bis 275° oder 280°, überdeckt wird. Weiterhin kann beispielsweise vorgesehen sein, dass der Winkelbereich größer 270° sich von 270° bis 280°, insbesondere 270° bis 275°, erstreckt und dass der Winkelbereich kleiner als 270° sich von 260° bis 270°, insbesondere von 265° bis 270°, erstreckt.

Ein weiteres sehr wesentliches Merkmal des erfindungsgemäßen Einlippenbohrers ist, dass die äußere, der Bohrung zugewandte Oberfläche des wenigstens einen Führungselements in einem Winkelbereich größer 245° einen geringfügig kleineren radialen Abstand von der Werkzeugmittelachse aufweist als die äußere Oberfläche des Führungselements in einem Winkelbereich kleiner 245° bzw. die äußeren, der Bohrung zugewandten Oberflächen weiterer Führungselemente. Es sind dabei im Bereich größer als 245° ein oder mehrere Führungselemente vorgesehen, die einen radialen Abstand von der Werkzeugmittelachse aufweisen, der kleiner ist als der radiale Abstand von der Werkzeugmittelachse des oder der Führungselemente, die in einem Winkelbereich kleiner als 245° angeordnet sind. Hierdurch wird eine optimale Führung des Tieflochbohrers in der Bohrung erreicht, ohne dass die Gefahr besteht, dass der Bohrer in der Bohrung klemmt. Diese Führungselemente können einen radialen Abstand von der Werkzeugmittelachse aufweisen, der um bis zu 50 µm, insbesondere bis zu 20 µm kleiner ist als der Abstand der äußeren Oberfläche der Führungselemente in einem Winkelbereich kleiner 245°.

Der Bohrkopf des Einlippenbohrers verjüngt sich vorteilhafterweise zu seinem Einspann-Ende hin. Auch durch diese Ausbildung wird ein Verklemmen des Bohrers in der Bohrung verhindert.

Gemäß einer vorteilhaften Ausgestaltung kann vorgesehen sein, dass ein erster Teil des Bohrkopfes konisch ausgebildet ist und ein sich daran anschließender zweiter Teil des Bohrkopfes zylindrisch ausgebildet ist.

Um eine möglichst optimale Spanabfuhr zu ermöglichen, ist wenigstens eine Wand des Spanabfuhrkanals vorzugsweise gekrümmt. Insbesondere im Bereich des Bohrkopfes wird durch die gekrümmte Ausbildung der wenigstens einen Wand des Spanabfuhrkanals ein größerer Öffnungsquerschnitt als bei einer nicht gekrümmten ebenen Wand erzielt, um dabei trotz kleinerem Öffnungswinkel eine optimale Spanabfuhr zu erreichen. Gekrümmt bedeutet vorliegend nicht nur eine kontinuierliche Krümmung, sondern beispielsweise eine facettenartige Krümmung, also eine Aneinanderreihung von ebenen, in einem Winkel zueinander angeordneten ebenen Flächen oder auch eine Aneinanderreihung von im Winkel zueinander angeordneten, ihrerseits gekrümmten Flächen. Die Krümmung der wenigstens einen Wand ist dabei so ausgebildet, dass ein möglichst großer Querschnitt der Spanabfuhr erzeugt wird, um so eine möglichst optimale Spanabfuhr sicherzustellen.

Die den Spanabfuhrkanal begrenzenden Wände schließen dabei im Bereich des Bohrkopfes einen Öffnungswinkel ein, der kleiner ist als 115°. Gemäß einer vorteilhaften Ausgestaltung ist der Öffnungswinkel kleiner 90°.

Im Bereich des Schaftes schließen die den Spanabfuhrkanal begrenzenden Wände dagegen einen Öffnungswinkel ein, der größer als 90° sein kann, um an sich bekannte, gebräuchliche Schäfte verwenden zu können.

Es kann aber auch vorgesehen sein, dass sowohl der Bohrkopf als auch der Schaft einen Öffnungswinkel einschließen, der kleiner ist als 90°.

Um die Späne durch diesen gegenüber bekannten Vollbohrwerkzeugen kleineren Spanraum prozesssicher abtransportieren zu können, kann darüber hinaus eine Schneidengeometrie verwendet werden, die für den Einsatz einer Bohrvorrichtung mit Oszillation vorgesehen ist. Durch diese Schneidengeometrie in Verbindung mit der Bohrvorrichtung mit Oszillation wird das Spanvolumen deutlich reduziert und kann auf diese Weise auch durch einen Spanraum mit einem Öffnungswinkel kleiner als 90° prozesssicher abtransportiert werden. Die Schneidengeometrie ist dabei vorteilhafterweise so ausgebildet, wie es in der DE 20 2009 012 569 U1 beschrieben ist, auf die diesbezüglich vollinhaltlich Bezug genommen wird. Die Schneide weist demnach einen Spanteiler auf, der die Schneide in einen inneren Schneidenbereich und wenigstens einen äußeren Schneidenbereich teilt, wobei der wenigstens eine äußere Schneidenbereich einen nach außen gekrümmten Umriss aufweist.

Gemäß einer vorteilhaften Ausgestaltung ist der Bohrkopf mit dem Schaft stoffschlüssig verbunden. Der Bohrkopf und der Schaft können auch einstückig ausgebildet sein. Darüber hinaus kann ein auswechselbarer Bohrkopf vorgesehen sein.

Gemäß einer Ausführungsform ist der Schaft aus einem Profilrohr gefertigt. Der Schaft kann aus Stahl und/oder Hartmetall bestehen.

Weitere Ausgestaltungen betreffen den Bohrkopf, der aus Hartmetall hergestellt sein kann und/oder mit einer Beschichtung, beispielsweise einer Hartstoffschicht, versehen sein kann. Mit diesen Maßnahmen kann die Standzeit des Einlippenbohrers erheblich verlängert werden.

Ferner kann vorgesehen sein, dass der Bohrkopf aus einem Träger besteht, an dem Schneiden und/oder Führungselemente aus einem verschleißbeständigen Material, insbesondere Hartmetall, angeordnet sind. Dabei kann vorgesehen sein, dass die Schneiden und/oder die Führungselemente auswechselbar sind.

Wie oben bereits erwähnt, weist die Schneide bevorzugt einen Spanteiler auf, der die Schneide in einen inneren und wenigstens einen äußeren Schneidenbereich unterteilt, wobei der wenigstens eine äußere Schneidenbereich einen nach außen gekrümmten Umriss aufweist.

Weitere vorteilhafte Weiterbildungen und Ausgestaltungen des erfindungsgemäßen Einlippenbohrers sind Gegenstand der nachfolgenden Beschreibung.

### Zeichnungen

Ausführungsbeispiele der Erfindung sind in den Zeichnungen dargestellt und in der nachfolgenden Beschreibung näher erläutert. Es zeigen:
- Fig. 1a: eine isometrische Darstellung eines aus dem Stand der Technik bekannten Einlippenbohrers zum Vollbohren;
- Fig. 1b: eine Seitenansicht des in Fig. 1a dargestellten Einlippenbohrers;
- Fig. 2a: eine isometrische Darstellung eines erfindungsgemäßen Einlippenbohrers zum Vollbohren;
- Fig. 2b: eine Seitenansicht des in Fig. 2a dargestellten Einlippenbohrers;
- Fig. 3a: eine isometrische Darstellung einer anderen Ausgestaltung eines erfindungsgemäßen Einlippenbohrers zum Vollbohren;
- Fig. 3b: eine Seitenansicht des in Fig. 3a dargestellten Einlippenbohrers;
- Fig. 4a: einen Querschnitt durch den Bohrkopf des in Fig. 1b dargestellten Einlippenbohrers entlang der Linie A-A;
- Fig. 4b: einen Querschnitt durch die in Fig. 1b, 2b und 3b dargestellten Einlippenbohrer entlang der Linie B-B;
- Fig. 4c: einen Querschnitt durch die in Fig. 2b und 3b dargestellten Einlippenbohrer entlang der Linie C-C;
- Fig. 4d: einen Querschnitt durch den in Fig. 3b dargestellten Einlippenbohrers entlang der Linie D-D;
- Fig. 5a: schematisch den Mittenverlauf einer mit einem aus dem Stand der Technik bekannten Einlippenbohrer hergestellten Bohrung und
- Fig 5b: den Mittenverlauf einer mit einem erfindungsgemäßen Einlippenbohrer hergestellten Bohrung.

### Beschreibung von Ausführungsbeispielen

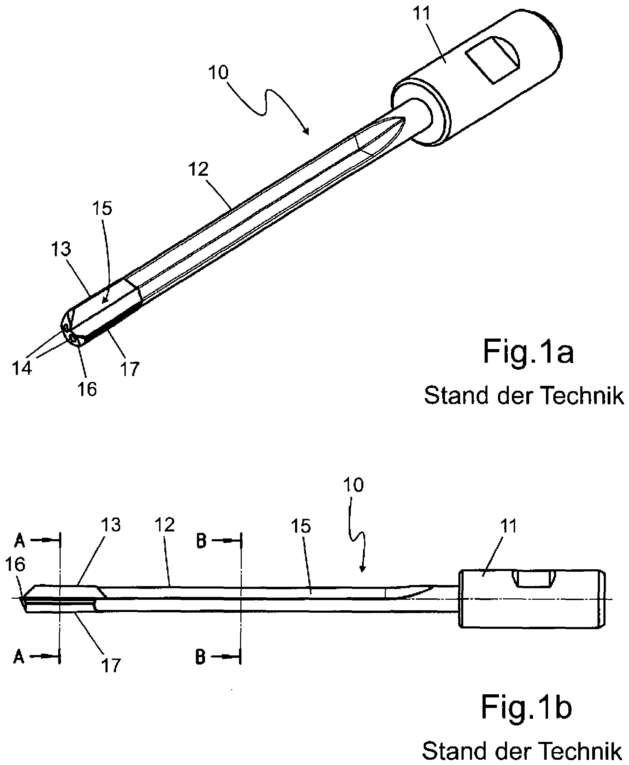

Fig. 1a und 1b zeigen einen Einlippenbohrer 10 mit einer Schneide 14, wie er aus dem Stand der Technik bekannt ist. Der Einlippenbohrer 10 weist ein Einspann-Ende 11 zur Aufnahme in einem in den Fig. 1a und 1b nicht näher gezeigten Bohrfutter und einen Bohrerschaft 12 mit einem Bohrkopf 13 auf. Der Bohrerschaft 12 und der Bohrkopf 13 sind beispielsweise einstückig realisiert oder aus zwei Teilen stoffschlüssig zusammengesetzt. Im Bohrerschaft 12 ist wenigstens ein Kühlmittelkanal 14 vorgesehen, der im vorderen Ende des Bohrkopfes 13 mündet. Das durch den Kühlmittelkanal 14 gepumpte Kühlmittel hat nicht nur die Aufgabe, den Bohrkopf 13 zu kühlen, sondern dient auch zum Abtransport der beim Bohren entstehenden Späne durch eine Spanabfuhrnut 15, die an der Schneide 16 des Einlippenbohrers 10 beginnt und sich nahezu über die gesamte Länge des Bohrerschafts 12 erstreckt. Am Umfang des Bohrkopfes 13 kann wenigstens ein, vorzugsweise mehrere Führungselemente 17 vorgesehen sein, die der Führung des Werkzeuges dienen.

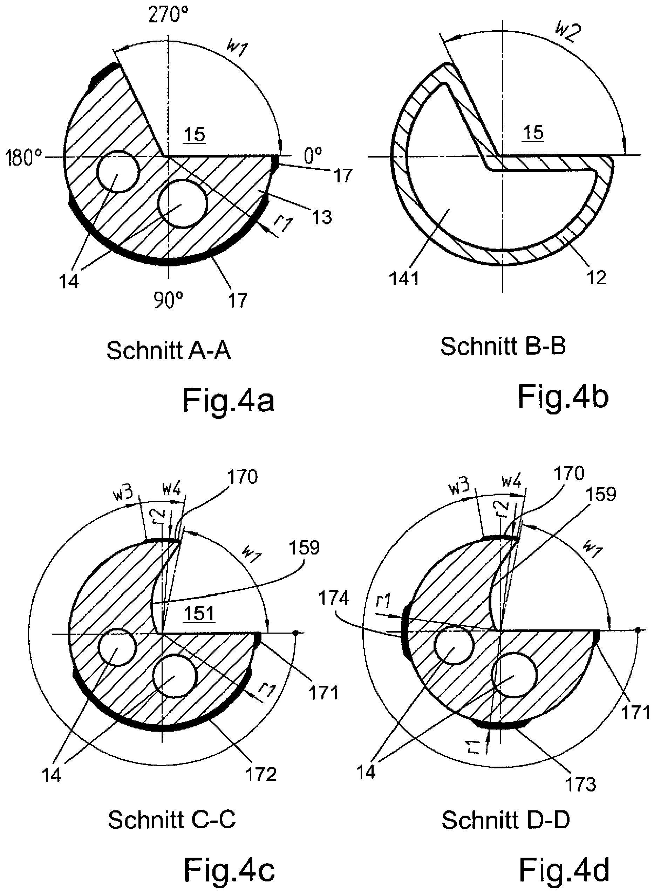

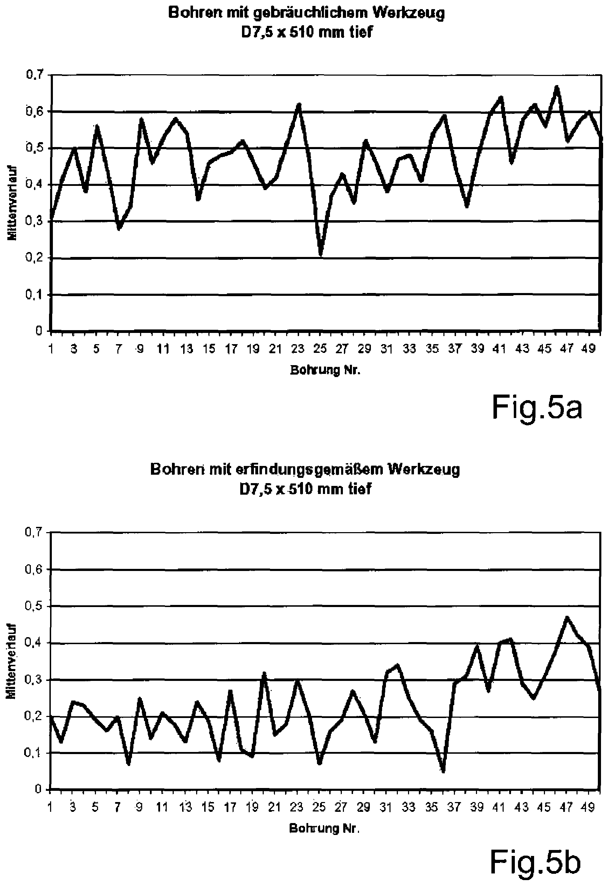

In Fig. 4a ist ein Schnitt entlang der in Fig. 1b gezeigten Linie A-A durch den Bohrkopf 13 und in Fig. 4b ist ein Schnitt entlang der in Fig. 1b dargestellten Linie B-B durch den Bohrerschaft, kurz auch Schaft 12 genannt, dargestellt. Diese Schnittdarstellungen zeigen den Querschnitt der Spanabfuhrnut. Die Spanabfuhrnut 15 weist eine im Wesentlichen V-förmige Gestalt auf, ihre ebenen Wände schließen einen Öffnungswinkel w1 von etwa 115°, ein. Der Öffnungswinkel w2 im Bereich des Schafts 12 kann von dem Öffnungswinkel w1 im Bereich des Bohrkopfes 13 abweichen. Der Schaft kann hohl ausgebildet sein, wobei der Hohlraum 141 mit den Kühlmittelkanälen 14 fluidisch verbunden ist. Mit einem derartigen Einlippenbohrer ergibt sich bei Vollbohrungen ein Mittenverlauf, der in Fig. 5a schematisch dargestellt ist. Als Mittenverlauf wird eine die Qualität von Bohrungen charakterisierende Messgröße bezeichnet. Der Mittenverlauf ist die Abweichung des Bohrungsaustritts zum Bohrungseintritt quer zur idealen Achse der Bohrung. Wie der Fig. 5a zu entnehmen ist, schwankt der Mittenverlauf bei der dort darstellten Bohrung mit einem Durchmesser von 7,5 mm und einer Länge von 510 mm, die mit einem aus dem Stand der Technik bekannten und in Fig. 1a, b dargestellten Einlippenbohrer hergestellt wurde, verhältnismäßig stark und liegt dabei im Mittel bei Werten von etwa 0,4 bis 0,5 mm.

In der industriellen Fertigung sind präzise Tieflochbohrungen mit im Wesentlichen zylindrischer Gestalt erwünscht, wobei die Bohrung entlang der Zylinderachse verlaufen soll und die Wandstärke nach der Fertigstellung der Bohrung besonders gleichmäßig sein soll. Die Bohrung soll darüber hinaus kostengünstig realisiert werden können. Um eine möglichst gleichmäßige Wandstärke zu erzielen, sind Bohrungen mit besonders geringem Mittenverlauf erforderlich. Mit dem in Fig. 1a und 1b dargestellten, aus dem Stand der Technik bekannten Einlippenbohrer sind derartige Bohrungen nicht in einem Arbeitsschritt herzustellen, da wie in Fig. 5a dargestellt, der Mittenverlauf zu große Werte annehmen kann. Aus diesem Grunde müssen Bohrungen in zwei Arbeitsschritten hergestellt werden. Zunächst wird das Werkstück mit einem Vollbohrwerkzeug vorgebohrt. Hierbei wird der benötigte Mittenverlauf noch nicht erreicht (vergl. Fig. 5a), in einem zweiten Arbeitsschritt werden die Werkstücke dann mit einem Aufbohrwerkzeug aufgebohrt. Mit diesem Arbeitsschritt kann der erwünschte Mittenverlauf erzielt werden. Zwei derartige Arbeitsschritte zur Herstellung einer Bohrung sind jedoch zeit- und kostenaufwendig und daher in der industriellen Fertigung unerwünscht.

Aus diesem Grunde sieht die Erfindung vor, bei einem Einlippenbohrer wenigstens ein Führungselement wenigstens teilweise in einem Bereich so anzuordnen, dass vorgebbare Winkelbereiche kleiner und größer 270°, entgegen der Drehrichtung von der Schneide aus gemessen, überdeckt werden. Dabei werden bevorzugt mehr als ein Führungselement angeordnet, wobei wenigstens eines dieser Führungselemente in den genannten Winkelbereichen kleiner und größer 270° angeordnet ist, sodass eine Führung im Winkelbereich 270° realisiert wird. Wenn im Folgenden von Winkel oder Winkelbereichen in Bezug auf die Anordnung der Führungselemente gesprochen wird, so ist hiermit immer ein Winkel entgegen der Drehrichtung des Einlippenbohrers von der Schneide aus gemessen gemeint.

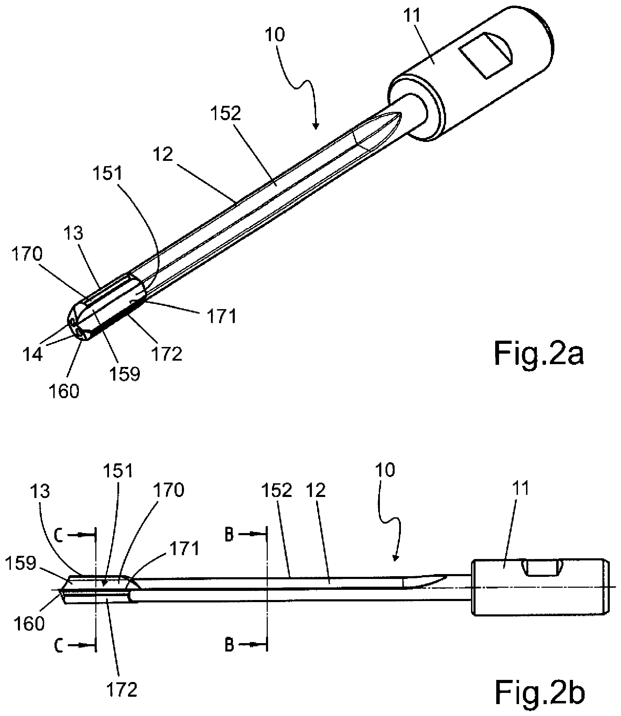

Eine erste Ausführungsform eines solchen erfindungsgemäßen Bohrers ist in Fig. 2a und 2b dargestellt. In Fig. 2a und 2b sind gleiche Elemente mit den gleichen Bezugszeichen wie in Fig. 1a und 1b versehen, sodass bezüglich deren Beschreibung auf das Vorstehende Bezug genommen wird. Im Unterschied zu dem in Fig. 1a und 1b dargestellten Einlippenbohrer ist bei dem in Fig. 2a und 2b gezeigten Einlippenbohrer im Bereich des Bohrkopfes 13 ein Führungselement 170 in einem von der Schneide aus gemessenen Winkelbereich von etwa 260 bis 280°, bevorzugt 265° bis 275°, und insbesondere bei 270° angeordnet. Der Öffnungswinkel w1 verkleinert sich hierdurch auf weniger als 90°. Die Spanabfuhrnut 151 weist demnach einen Öffnungswinkel kleiner als 90° auf. Um eine optimale Späneabfuhr trotzdem sicherzustellen, ist daher vorgesehen, wenigstens eine Wand der Spanabfuhrnut 151, beispielsweise die Wand 159, bogenförmig gekrümmt auszubilden, wie es in der Schnittdarstellung Fig. 4c schematisch dargestellt ist. Gekrümmt bedeutet dabei im Sinne der vorliegenden Erfindung, dass die Wand entweder kontinuierlich gekrümmt ist, wie es in Fig. 4c und 4d dargestellt ist, oder dass die Wand facettenartig ausgebildet ist, wie es in den Figuren nicht dargestellt ist. Facettenartig ausgebildet bedeutet dabei, dass beispielsweise ebene Wandsegmente, die im Winkel zueinander angeordnet sind, vorgesehen sind, die eine gekrümmte Oberfläche bilden. Dabei müssen die Segmente nicht ebene Flächen aufweisen, sie können ihrerseits gekrümmt ausgebildet sein. In jedem Fall soll durch die Krümmung eine Vergrößerung des Querschnitts der Spanabfuhrnut erzielt werden. Wie aus Fig. 4c ebenfalls ersichtlich, sind im Bereich des Bohrkopfes neben dem Führungselement 170 weitere Führungselemente 171, 172 angeordnet.

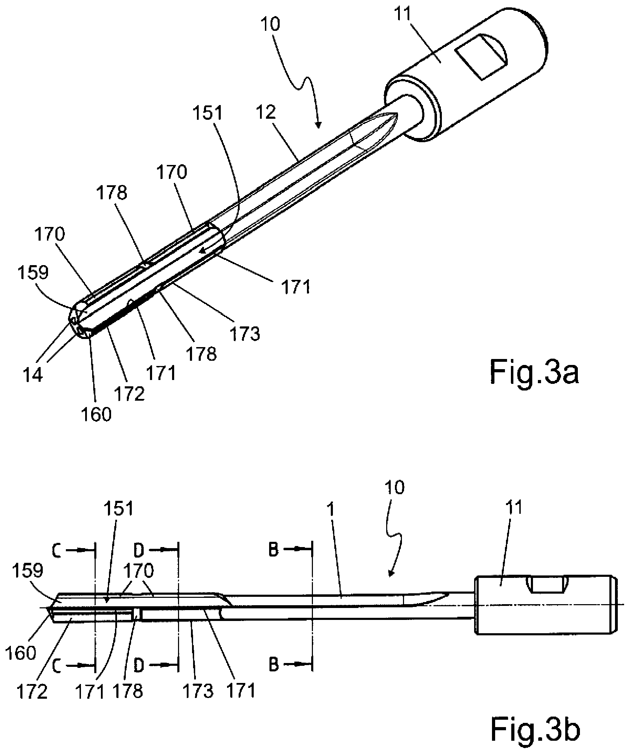

Eine andere Ausgestaltung des erfindungsgemäßen Einlippenbohrers ist in den Fig. 3a und 3b dargestellt. In diesen Figuren bezeichnen wiederum die gleichen Bezugszeichen die gleichen Elemente wie in Fig. 2a und 2b, sodass bezüglich deren Beschreibung auf das Vorstehende verwiesen wird. Im Unterschied zu dem in Fig. 2a und 2b dargestellten Ausführungsbeispiel sind an dem Bohrkopf entlang der Bohrachse jeweils zwei Führungselemente 172, 173 angeordnet, die durch eine Nut 178, die in Umfangsrichtung verläuft, in Längsrichtung des Einlippenbohrers voneinander getrennt sind. Die Nut 178 teilt den Bohrkopf in zwei Bereiche, einen ersten konischen Teil und einen daran anschließenden, weiter in Richtung Einspann-Ende 11 gelegenen zylindrischen Teil. Durch diese Anordnung wird eine besonders gute Führung in der Bohrung erzielt und gleichzeitig ein Festklemmen in der Bohrung verhindert. Auch bei dieser Ausführungsform ist wiederum ein Führungselement in einem Bereich angeordnet, der sich etwa von 260° bis 280°, gemessen von der bei 0° angeordneten Schneide aus, erstreckt, sodass auch hier der Öffnungswinkel w1 des Spanabfuhrkanals 151 kleiner als 90° ist. Auch in diesem Fall ist wenigstens eine Wand des Spanabfuhrkanals, beispielsweise die Wand 159, gekrümmt ausgebildet um eine möglichst optimale Abfuhr der Späne sicherzustellen. Eine Schnittdarstellung durch den weiter in Richtung Einspann-Ende 11 gelegenen Teil des Bohrkopfs ist Gegenstand der Fig. 4d. Neben dem Führungselement 171 sind die Führungselemente 173, 174 jeweils im Bereich von etwa 90 bzw. 180°, gemessen von der bei 0° angeordneten Schneide aus, angeordnet. Durch diese Ausbildung wird eine weitere Verbesserung der Führung des Einlippenbohrers in der Bohrung ermöglicht.

Bei den in Fig. 2a, 2b, 3a und 3b gezeigten Einlippenbohrern sind generell auch andere Anordnungen von Führungselementen möglich. Hauptaugenmerk der Erfindung liegt auf dem Führungselement, das im Bereich von etwa 260° - 280° angeordnet ist.

Die äußere Oberfläche des Führungselements 170, das in einem Bereich von etwa 260 bis 280° und insbesondere bei 270° angeordnet ist, befindet sich von der Symmetrieachse (Mittenachse) des Bohrers aus gemessen in einem kleineren Radius r2 als die äußere Oberfläche der Führungselemente 171, 172, 173 und 174, die einen Radius r1 von der Symmetrieachse des Bohrers aus gemessen beschreiben. Durch diese Ausbildung r2 kleiner r1 wird ein Festklemmen des Einlippentieflochbohrers in der Bohrung sehr wirkungsvoll verhindert, wobei r2 jedoch nur geringfügig kleiner sein darf als r1, um weiterhin eine Führung in der Bohrung zu gewährleisten. Der Radius r2 wird so gewählt, dass er bis zu 50 µm, insbesondere bis zu 20 µm, kleiner ist als der Radius r1.

Sowohl der in Fig. 2a, b als auch der in Fig. 3a, b dargestellten Einlippenbohrer sind vorzugsweise so ausgebildet, dass sich der Bohrkopf 13 zu seinem Einspannende hin verjüngt. Dabei kann auch vorgesehen sein, dass ein erster Teil des Bohrkopfs 13 konisch ausgebildet ist und sich daran ein zweiter Teil des Bohrkopfs anschließt, der zylindrisch ausgebildet ist. Bei dem in Fig. 3a, 3b dargestellten Bohrkopf ist ein erster, benachbart zur Bohrerspitze gelegener (in Fig. 3a und Fig. 3b links dargestellter Teil konisch ausgebildet und ein zweiter von dem ersten durch die Nut 178 geteilter und in Richtung Einspann-Ende 11 gelegener Bereich zylindrisch ausgebildet.

Der Bohrkopf 13 ist mit dem Schaft 12 beispielsweise stoffschlüssig verbunden. Bohrkopf 13 und Schaft 12 können auch einstückig ausgebildet sein. Es kann auch vorgesehen sein, dass der Bohrkopf 13 lösbar an dem Schaft 12 befestigt ist und insoweit auswechselbar ist. Der Bohrkopf besteht bevorzugt aus Hartmetall. Er kann zumindest teilweise mit einer Hartstoffschicht beschichtet sein.

Es kann auch vorgesehen sein, dass der Bohrkopf aus einem Träger besteht, an dem die Schneide 160 oder weitere Schneiden und/oder Führungselemente aus einem verschleißbeständigen Material, insbesondere Hartmetall, angeordnet sind. Die Schneiden und/oder die Führungselemente können auswechselbar sein.

Der Schaft 12 besteht bevorzugt aus einem Profilrohr, wodurch ein großer Öffnungsquerschnitt für den fluidischen Kanal 141 bereitgestellt wird. Der Schaft kann - muss aber nicht - beispielsweise aus Stahl gefertigt sein. Bohrkopf 13 und Schaft 12 können auch aus einem einzigen Hartmetallstück bestehen.

Mit dem in Fig. 2a, 2b sowie 3a, 3b gezeigten Bohrer sind wesentlich bessere Vollbohrungen mit einem in Fig. 5b dargestellten Mittenverlauf möglich. Der Mittenverlauf weist gegenüber einem aus dem Stand der Technik und in Fig. 1a, 1b dargestellten Bohrer (vergl. Fig. 5a) deutlich kleinere Werte auf. Aus diesem Grunde ist mit den erfindungsgemäßen Einlippenbohrern, dargestellt in den Fig. 2a, 2b sowie 3a, 3b, ein Herstellen von Bohrungen mit geringem Mittenverlauf in einem einzigen Arbeitsschritt möglich. Dies wird im Wesentlichen dadurch erzielt, dass durch das im Bereich von 270° angeordnete weitere Führungselement 170 eine Abstützung des Bohrers über einen großen Winkelbereich und damit eine besonders gute Führung in der Bohrung ermöglicht wird.

Es ist an dieser Stelle besonders hervorzuheben und zu erwähnen, dass der erfindungsgemäße Bohrer eine Schneide 160 aufweisen kann, die sich von der aus dem Stand der Technik bekannten Schneide 16 dadurch unterscheidet, dass sie eine Schneidengeometrie aufweist, die für den Einsatz einer Bohrvorrichtung mit Oszillation, wie sie beispielsweise aus der DE 10 2005 025 364 A1 hervorgeht, optimiert ist. Eine für einen solchen Einlippenbohrer geeignete Schneide ist beispielsweise in der DE 20 2009 012 569 U1 offenbart, wobei in der Schneide wenigstens ein Spanteiler vorgesehen ist, welcher die Schneide in einen inneren Schneidenbereich und wenigstens einen äußeren Schneidenbereich teilt. Der wenigstens eine äußere Schneidenbereich weist einen nach außen gekrümmten Umriss auf. Dieser nach außen gekrümmte Umriss kann beispielsweise durch ebene Geraden aber auch durch einen Kreisbogen oder durch eine entsprechend konvexe Krümmung ausgebildet sein.

Der vorstehend beschriebene erfindungsgemäße Einlippenbohrer ist bevorzugt als Vollbohrwerkzeug ausgebildet. Dies ermöglicht die Herstellung der Bohrungen in einem einzigen Arbeitsschritt und damit eine kostenoptimierte Herstellung einer sehr präzisen Bohrung.

## Patentansprüche

1. Einlippenbohrer (10) mit wenigstens einer Schneide (160) zum Vollbohren, umfassend einen an einem Schaft (12) angeordneten Bohrkopf (13) und einen sich im Wesentlichen entlang der Achse des Bohrkopfs (13) und des Schafts (12) erstreckenden, in sowohl dem Bohrkopf (13) als auch dem Schaft (12) angeordneten Spanabfuhrkanal (151) sowie wenigstens ein am Umfang des Bohrkopfs (13) angeordnetes Führungselement (170, 171, 172, 173), **dadurch gekennzeichnet, dass** wenigstens ein Teil des wenigstens einen Führungselements so angeordnet ist, dass ein vorgebbarer Winkelbereich von dem Führungselement überdeckt wird, wobei der vorgebbare Winkelbereich sich über einen Winkelbereich größer 245° entgegen der Drehrichtung des Einlippenbohrers von der bei 0° angeordneten Schneide aus gemessen erstreckt, und dass die äußere, der Bohrung zugewandte Oberfläche des wenigstens einen Führungselements (170) wenigstens in einem Winkelbereich größer 245° einen kleineren radialen Abstand (r2) von der Werkzeugmittelachse aufweist als der Abstand (r1) der äußeren, der Bohrung zugewandten Oberfläche(n) des/der Führungselements/Führungselemente in einem Winkelbereich kleiner 245°.

2. Einlippenbohrer (10) nach Anspruch 1, **dadurch gekennzeichnet, dass** sich der Winkelbereich größer als 260° erstreckt.

3. Einlippenbohrer (10) nach Anspruch 1, **dadurch gekennzeichnet, dass** der vorgebbare Winkelbereich sich von 265° - 275° erstreckt.

4. Einlippenbohrer nach Anspruch 1, **dadurch gekennzeichnet, dass** der kleinere radiale Abstand der Führungselemente in einem Winkelbereich größer 245° um bis zu 50 µm, insbesondere bis zu 20 µm, kleiner ist als der radiale Abstand (r1) der äußeren, der Bohrung zugewandte(n) Oberfläche(n) des/der Führungselements/Führungselemente in einem Winkelbereich kleiner als 245°.

5. Einlippenbohrer (10) nach Anspruch 1, **dadurch gekennzeichnet, dass** der Bohrkopf (13) sich zu seinem Einspannende hin verjüngt.

6. Einlippenbohrer (10) nach Anspruch 1, **dadurch gekennzeichnet, dass** ein erster Teil des Bohrkopfes konisch ausgebildet ist und ein sich daran anschließender zweiter Teil des Bohrkopfes (13) zylindrisch ausgebildet ist.

7. Einlippenbohrer (10) nach Anspruch 1, **dadurch gekennzeichnet, dass** wenigstens eine Wand (159) des Spanabfuhrkanals (151) gekrümmt ist.

8. Einlippenbohrer (10) nach Anspruch 1 oder 8, **dadurch gekennzeichnet, dass** die den Spanabfuhrkanal (151) begrenzenden Wände im Bereich des Bohrkopfes (13) einen Öffnungswinkel (w1) einschließen, der kleiner ist als 90°.

9. Einlippenbohrer (10) nach Anspruch 1, **dadurch gekennzeichnet, dass** die den Spanabfuhrkanal (151) begrenzenden Wände im Bereich des Schaftes (12) einen Öffnungswinkel (w2) einschließen, der größer ist als 90°.

10. Einlippenbohrer (10) nach Anspruch 1, **dadurch gekennzeichnet, dass** der Bohrkopf mit dem Schaft (12) stoffschlüssig verbunden ist.

11. Einlippenbohrer (10) nach Anspruch 1, **dadurch gekennzeichnet, dass** der Bohrkopf (13) und der Schaft (12) einstückig ausgebildet sind.

12. Einlippenbohrer (10) nach Anspruch 1, **dadurch gekennzeichnet, dass** der Bohrkopf (13) auswechselbar ist.

13. Einlippenbohrer (10) nach Anspruch 1, **dadurch gekennzeichnet, dass** der Bohrkopf (13) aus Hartmetall besteht.

14. Einlippenbohrer (10) nach Anspruch 1, **dadurch gekennzeichnet, dass** der Bohrkopf (13) zumindest teilweise mit einer Hartstoffschicht beschichtet ist.

15. Einlippenbohrer (10) nach Anspruch 1, **dadurch gekennzeichnet, dass** der Bohrkopf (13) aus einem Träger besteht, an dem Schneiden (160) und/oder Führungselemente (170, 171, 172, 173, 174) aus einem verschleißbeständigen Material, insbesondere Hartmetall, angeordnet sind.

16. Einlippenbohrer (10) nach Anspruch 1, **dadurch gekennzeichnet, dass** die Schneiden (160) und/oder die Führungselemente (170, 171, 172, 173, 174) auswechselbar sind.

17. Einlippenbohrer (10) nach Anspruch 1, **dadurch gekennzeichnet, dass** der Schaft (12) aus einem Profilrohr gefertigt ist.

18. Einlippenbohrer (10) nach Anspruch 1, **dadurch gekennzeichnet, dass** der Schaft (12) aus Stahl und/oder Hartmetall besteht.

19. Einlippenbohrer (10) nach Anspruch 1, **dadurch gekennzeichnet, dass** Bohrkopf (13) und Schaft (12) aus einem einzigen Hartmetallstück bestehen.

20. Einlippenbohrer (10) nach einem der vorstehenden Ansprüche, **dadurch gekennzeichnet, dass** seine Schneide einen Spanteiler aufweist.

## Claims

1. Single-fluted gun drill (10) having at least one cutting edge (160) for complete drilling, comprising a drill head (13) arranged on a shaft (12) and a chip removal channel (151) extending substantially along the axis of the drill head (13) and the shaft (12) and arranged in both the drill head (13) and the shaft (12), and at least one guiding element (170, 171, 172, 173) arranged on the periphery of the drill head (13), **characterised in that** at least one part of the at least one guiding element is arranged in such a way that a predeterminable angular range of the guiding element is covered, wherein the predeterminable angular range extends beyond an angular range greater than 245° against the rotational direction of the single lip drill measured from the cutting edge arranged at 0°, and the outer surface, which faces towards the bore, of the at least one guiding element (170) in an angular range greater than 245° has a smaller radial distance (r2) from the tool central axis than the distance (r1) from the outer surface(s), which face(s) towards the bore, of the guiding element/guiding elements in an angular range smaller than 245°.

2. Gun drill (10) according to claim 1, **characterised in that** the angular range extends greater than 260°.

3. Gun drill (10) according to claim 1, **characterised in that** the predeterminable angular range extends from 265° - 275°.

4. Gun drill (10) according to claim 1, **characterised in that** the smaller radial distance of the guiding elements in an angular range greater than 245° is smaller by up to 50 µm, in particular up to 20 µm, than the radial distance (r1) of the outer surface(s), which face(s) towards the bore, of the guiding element/guiding elements, said outer surface(s), in an angular range smaller than 245°.

5. Gun drill (10) according to claim 1, **characterised in that** the drill head (13) tapers towards its clamping end.

6. Gun drill (10) according to claim 1, **characterised in that** a first part of the drill head is formed conically and a second part of the drill head (13) attached thereto is formed cylindrically.

7. Gun drill (10) according to claim 1, **characterised in that** at least one wall (159) of the chip removal channel (151) is curved.

8. Gun drill (10) according to claim 1 or 8, **characterised in that** the walls bordering the chip removal channel (151) form an opening angle (w1), which is smaller than 90°, in the region of the drill head (13).

9. Gun drill (10) according to claim 1, **characterised in that** the walls bordering the chip removal channel (151) form an opening angle (w2), which is greater than 90°, in the region of the shaft (12).

10. Gun drill (10) according to claim 1, **characterised in that** the drill head is firmly bonded with the shaft (12).

11. Gun drill (10) according to claim 1, **characterised in that** the drill head (13) and the shaft (12) are integrally formed.

12. Gun drill (10) according to claim 1, **characterised in that** the drill head (13) can be exchanged.

13. Gun drill (10) according to claim 1, **characterised in that** the drill head (13) consists of hard metal.

14. Gun drill (10) according to claim 1, **characterised in that** the drill head (13) is at least partially coated with a hard material layer.

15. Gun drill (10) according to claim 1, **characterised in that** the drill head (13) consists of a carrier, on which cutting edges (160) and/or guiding elements (170, 171, 172, 173, 174) made of a wear-resistant material, in particular hard metal, are arranged.

16. Gun drill (10) according to claim 1, **characterised in that** the cutting edges (160) and/or the guiding elements (170, 171, 172, 173, 174) can be exchanged.

17. Gun drill (10) according to claim 1, **characterised in that** the shaft (12) is produced from a profile tube.

18. Gun drill (10) according to claim 1, **characterised in that** the shaft (12) consists of steel and/or hard metal.

19. Gun drill (10) according to claim 1, **characterised in that** the drill head (13) and shaft (12) consist of a single piece of hard metal.

20. Gun drill (10) according to one of the preceding claims, **characterised in that** its cutting edge has a chip splitter.

## Revendications

1. Foret 3/4 à 1 lèvre (10) doté d'au moins une lame (160) pour le perçage dans la plein, comprenant une tête de perçage (13) disposée sur une tige (12) et un canal d'évacuation de copeaux (151) s'étendant essentiellement le long de l'axe de la tête de perçage (13) et de la tige (12), disposé à la fois dans la tête de perçage (13) et dans la tige (12), ainsi qu'au moins un élément de guidage (170, 171, 172, 173) disposé sur le pourtour de la tête de perçage (13), **caractérisé en ce qu'**au moins une partie de l'au moins un élément de guidage est disposée de telle manière qu'une zone angulaire prédéfinie de l'élément de guidage est recouverte, la zone angulaire prédéfinie s'étendant sur une zone angulaire supérieure à 245 ° par rapport à la direction de rotation du foret 3/4, mesurée à partir de la lame disposé à 0 °, et que la surface extérieure, orientée vers l'alésage de l'au moins un élément de guidage (170) présente, dans une zone angulaire supérieure à 245 °, une distance radiale (r2) plus petite à partir de l'axe central d'outil que la distance (r1) de la (des) surface(s) extérieure(s), orientée(s) vers l'alésage de l'élément de guidage / des éléments de guidage dans une zone angulaire inférieure à 245 °.

2. Foret 3/4 (10) selon la revendication 1, **caractérisé en ce que** la zone angulaire s'étend sur plus de 260 °.

3. Foret 3/4 (10) selon la revendication 1, **caractérisé en ce que** la zone angulaire prédéfinie s'étend sur 265 ° à 275 °.

4. Foret 3/4 (10) selon la revendication 1, **caractérisé en ce que** la plus petite distance radiale des éléments de guidage, dans une zone angulaire supérieure à 245 °, est plus petite de 50 µm, notamment de 20 µm, que la distance radiale (r1) de la (des) surface(s) extérieure(s), orientée(s) vers l'alésage de l'élément de guidage / des éléments de guidage dans une zone angulaire inférieure à 245 °.

5. Foret 3/4 (10) selon la revendication 1, **caractérisé en ce que** la tête de perçage (13) s'amenuise vers son extrémité d'insertion.

6. Foret 3/4 (10) selon la revendication 1, **caractérisé en ce qu'**une première partie de la tête de perçage est conçue conique et une seconde partie de la tête de perçage (13), qui lui est contigüe, est conçue cylindrique.

7. Foret 3/4 (10) selon la revendication 1, **caractérisé en ce qu'**au moins une paroi (159) du canal d'évacuation des copeaux (151) est courbe.

8. Foret 3/4 (10) selon la revendication 1 ou la revendication 8, **caractérisé en ce que** les parois délimitant le canal d'évacuation des copeaux (151) contiennent un angle d'ouverture (w1) qui est inférieur à 90° dans la zone de la tête de perçage (13).

9. Foret 3/4 (10) selon la revendication 1, **caractérisé en ce que** les parois délimitant le canal d'évacuation des copeaux (151) contiennent un angle d'ouverture (w2) qui est supérieur à 90° dans la zone de la tige (12).

10. Foret 3/4 (10) selon la revendication 1, **caractérisé en ce que** la tête de perçage est reliée avec la tige (12) par complémentarité des matières.

11. Foret 3/4 (10) selon la revendication 1, **caractérisé en ce que** la tête de perçage (13) et la tige (12) sont conçues d'un seul tenant.

12. Foret 3/4 (10) selon la revendication 1, **caractérisé en ce que** la tête de perçage (13) est échangeable.

13. Foret 3/4 (10) selon la revendication 1, **caractérisé en ce que** la tête de perçage (13) est constituée d'un métal dur.

14. Foret 3/4 (10) selon la revendication 1, **caractérisé en ce que** la tête de perçage (13) est revêtue au moins partiellement avec une couche de matière dure.

15. Foret 3/4 (10) selon la revendication 1, **caractérisé en ce que** la tête de perçage (13) est constituée d'un support sur lequel sont disposés des lames (160) et/ou des éléments de guidage (170, 171, 172, 173, 174) à base d'un matériau résistant à l'usure, notamment un métal dur.

16. Foret 3/4 (10) selon la revendication 1, **caractérisé en ce que** les lames (160) et/ou les éléments de guidage (170, 171, 172, 173, 174) sont échangeables.

17. Foret 3/4 (10) selon la revendication 1, **caractérisé en ce que** la tige (12) est fabriquée à partir d'un tube profilé.

18. Foret 3/4 (10) selon la revendication 1, **caractérisé en ce que** la tige (12) est constituée d'acier et/ou d'un métal dur.

19. Foret 3/4 (10) selon la revendication 1, **caractérisé en ce que** la tête de perçage (13) et la tige (12) sont constituées d'une seule pièce de métal dur.

20. Foret 3/4 (10) selon l'une des revendications précédentes, **caractérisé en ce que** sa lame présente un brise-copeaux.
